# EUROPEAN PATENT APPLICATION

(11) **EP 1 795 571 A1**
(43) Date of publication of application: **13.06.2007**
(21) Application number: 06101407.2
(22) Date of filing: 08.02.2006
(51) Int. Cl.: C09K 8/04, C09K 8/035, C09K 8/68, C09K 8/60

(54) **High temperature gellant for viscosity modification of low and high density brines**

(30) Priority: 07.12.2005 US 296145
(71) Applicant: Akzo Nobel N.V., 6824 BM Arnhem (NL)
(72) Inventor: Wei, Zhenqiang, 10603, North White Plains (US); Navarrete, Reinaldo Conrado, 10954, Nanuet (US)
(74) Representative: Schalkwijk, Pieter Cornelis

(57) **Abstract**

In accordance with the present invention, the rheology of an aqueous fluid is modified by a method which comprises adding to said aqueous fluid an amount of a viscoelastic composition sufficient to form a viscoelastic fluid. The viscoelastic composition of the invention comprises a combination of i) at least one alkyl amido quaternary amine, and ii) at least one coadditive that comprises a C₈₋₂₄ linear alkyl and/or alpha-olefin sulfate and/or sulphonate.

## Description

### Field of the Invention

The present invention relates to viscoelastic compositions and to methods and agents for modifying the rheological behavior of aqueous fluids such as used in well drilling, stimulation and similar subterranean operations.

### Background of the Invention

Fluids are used in well drilling operations, for example, to cool and lubricate the drilling bit, to carry away drilled solids and other debris, to suspend drilled cuttings and other debris when the fluid column is static, to control subsurface pressure, to prevent squeezing or caving of formations, to suspend propping agents, and to minimize damage to any potential production zone. In stimulation (hydraulic) operations fluids are used to transfer pressure from one location to another.

Drilling fluids and stimulation fluids can be water based or oil based. Typically, water based drilling and stimulation fluids can include one or more aqueous fluid thickening agents, lubricants, and corrosion inhibitors. The aqueous fluid can be fresh water or brine, and can include aqueous solutions of acids, alkali, lower alkanols (methanol, ethanol, and propanol), glycols, and the like, provided that the water miscible liquid does not adversely affect the viscoelastic properties of the aqueous fluid. Also included are emulsions of immiscible liquids in water and aqueous slurries of solid particulates such as clay.

Viscoelasticity is a desirable rheological feature in drilling fluids, workover or completion fluids, and stimulation fluids which can be provided by fluid modifying agents such as polymeric agents and surfactant gelling agents. Viscoelastic fluids are those which exhibit both elastic behavior and viscous behavior. Elasticity is defined as an instant strain (deformation) response of a material to an applied stress. Once the stress is removed, the material returns to its undeformed equilibrium state. This type of behavior is associated with solids. On the other hand, the viscous behaviour is defined as a continuous deformation resulting from an applied stress. After a while, the deformation rate (shear rate or strain rate in general) becomes steady. Once the stress is removed, the material does not return to its initial undeformed state. This type of behavior is associated with liquids. Viscoelastic fluids may behave as a viscous fluid or an elastic solid, or a combination of both depending upon the applied stress on the system and the time scale of the observation. Viscoelastic fluids exhibit an elastic response immediately after the stress is applied. After the initial elastic response, the strain relaxes and the fluid starts to flow in a viscous manner. The elastic behaviour of fluids is believed to aid significantly in the transport of solid particles. The viscosity of a viscoelastic fluid may also vary with the stress or rate of strain applied. In the case of shear deformations, it is very common that the viscosity of the fluid drops with increasing shear rate or shear stress. This behavior is usually referred to as "shear thinning". Viscoelasticity in fluids that is caused by surfactants can manifest itself shear thinning behavior. For example, when such a fluid is passed through a pump or is in the vicinity of a rotating drill bit, the fluid is in a high shear rate environment and the viscosity is low, resulting in low friction pressures and pumping energy savings. When the shearing stress is abated, the fluid returns to a higher viscosity condition. This is because the viscoelastic behavior is caused by surfactant aggregations in the fluid. These aggregations will adjust to the conditions of the fluid, and will form different aggregate shapes under different shear stresses. Thus, one can have a fluid that behaves as a high viscosity fluid under low shear rates, and a low viscosity fluid under higher shear rates. High low shear-rate viscosities are good for solids transport.

The elastic component of a viscoelastic fluid may also manifest itself in a yield stress value. This allows a viscoelastic fluid to suspend an insoluble material, for example sand or drill cuttings, for a greater time period than a viscous fluid of the same apparent viscosity. Yield stresses that are too high are not a good thing in drilling, as it may make restarting the drilling bit very difficult and causes a condition called "stuck pipe".

Another function of fluid modifying agents in oil drilling applications is in permeability modification. Secondary recovery of oil from reservoirs involves supplementing by artificial means the natural energy inherent in the reservoir to recover the oil. For example when the oil is stored in a porous rock it is often recovered by driving a pressurized fluid, such as brine, through one or more drill holes (injecting wells) into the reservoir formation to force the oil to a well bore from which it can be recovered. However, rock often has areas of high and low permeability. The brine injected can finger its way through the high permeability areas leaving unrecovered oil in the low permeability areas.

Various methods have been employed to solve this problem. For example, U.S. Patent No. 5,101,903 discloses a method for reducing the permeability of the more permeable zone of an underground formation having non-uniform permeability. The method comprises injecting into the formation a blend of surfactant and an alcohol, the blend being introduced in an amount effective to reduce the permeability of the more permeable zone of the formation. The preferred surfactant is an amine oxide such asdimethyltallowamine oxide delivered in water. A disclosed alcohol is isopropanol. The method may include the further step of injecting an alcohol slug following injection of the surfactant and alcohol blend.

U.S. Patent No. 4,745,976 discloses a method for partially or completely blocking the high permeability regions of a reservoir. The technique is based upon the ability to induce phase changes in surfactant solutions by changing counterions or by adding small quantities of different surfactants. An aqueous solution of an ionic surfactant may have a viscosity only slightly different from brine but an increase in the salt concentration or addition of a multivalent counterion can cause the surfactant to form a solid precipitate or form a gel-like structure of high viscosity. In the method of U.S. Patent No. 4,745,976, a first surfactant solution is injected into the formation followed by a water-soluble spacer fluid followed by a second surfactant solution. In situ mixing of the two surfactant solutions is affected by the tendency of different surfactant types to travel at different velocities through the reservoir. The compositions of the first and second surfactants solutions are chosen so that upon mixing, a precipitated or gel-like structure will form blocking the high permeability zone of the reservoir.

### Summary of the Invention

In accordance with the present invention, the rheology of an aqueous fluid is modified by a method which comprises adding to said aqueous fluid an amount of a viscoelastic composition sufficient to form a viscoelastic fluid. The viscoelastic composition of the invention comprises a combination of i) at least one alkyl amido quaternary amine, and ii) at least one coadditive that comprises a C₈₋₂₄ linear alkyl and/or alpha-olefin sulfate and/or sulphonate.

### Detailed Description of the Invention

The present invention generally relates to a viscoelastic composition that comprises a combination of i) at least one alkyl amido quaternary amine, and ii) at least one coadditive.

The alkyl amido quaternary amine employable in the viscoelastic composition of the invention is of the general formula: 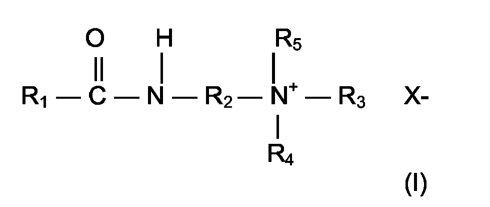 wherein R₁ is a saturated or unsaturated, straight or branched chain hydrocarbon chain of from 16 to 22 carbon atoms, R₂ is a divalent alkylene group of 2-6 carbon atoms which may be linear or branched, substituted or unsubstituted, R₃, R₄ and R₅ are independently selected from C₁-C₆ substituted or unsubstituted, straight or branched chain, saturated or unsaturated alkyl or hydroxyalkyl groups that may optionally be alkoxylated, and X- is an acceptable counterion. Alternatively, R₃, R₄ and/or R₅ together may form a heterocyclic ring of up to six members.

R₁ is preferably derived from a fatty aliphatic derived from natural fats o thor oils having an iodine value of from about 1 to about 140, preferably from about 30 to about 90, and more preferably from 40 to about 70. R₁ may be restricted to a single chain length or may be of mixed chain length such as those groups derived from natural fats and oils or petroleum stocks. Preferred are tallowalkyl, hardened tallow alkyl, rapeseed alkyl, hardened rapeseed alkyl, erucic alkyl, tall oil alkyl, hardened tall oil alkyl, coco alkyl, oleyl, or soya alkyl. R₂ is a straight chain or branched, substituted or unsubstituted divalent alkylene group of from 2 to about 6 carbon atoms, preferably, of 2 to 4 carbon atoms and more preferably of 3 carbon atoms. R₃, R₄ and R₅ are the same or different and are selected from alkyl, aryl or hydroxyalkyl groups of from 1 to about 8 carbon atoms and are preferably hydroxyethyl or methyl. Alternatively, R₃, R₄ and R₅ together with the nitrogen atom to which these groups are bonded form a heterocyclic ring of up to 6. R₅ is hydrogen or a C₁-C₄ alkyl or hydroxyalkyl group, and X- is an acceptable counterion, including, but not limited to halides, oxo ions of phosphorous, sulfur, or chloride, organic anions including but not limited to chlorides, bromides, iodides, oxides of phosphorous, hypochlorides, phosphates, phosphates, oxides of sulfur, sulfates, sulfites, sulfonates, phosphates, acetates, carboxylates, chlorates, perchlorates, salicylates, phthalates, lactates, maleates, glycinates, citrates, citric acid, lactic acid, salicylic acid, phthalic acid, benzoic acid, naphthoic acid, amino acids, and the like.

Specific examples of alkyl amido quaternary amines employable in the claimed composition include, but are not limited to, erucyl amidopropyl trimethyl ammonium chloride, isostearylamidopropylmorpholine, dimethylalkylglycerolammonium chloride, and the like.

As a second component, the viscoelastic composition of the invention employs at least one coadditive and/or cosurfactant. The coadditive functions to enhance the viscosity of the viscoelastic gel of abovementioned alkyl amido quaternary amine, especially at elevated temperatures. They also reduce the incubation time of the viscoelastic gel to shorten the preparation stage of such gel in the field. Preferred coadditives include, but are not limited to sulfonates, sulfates, inorganic or organic acids, etc. and the like. Particularly effective coadditives are linear alkyl sulfate/sulfonate, linear alpha olefin sulfate/sulfonate, linear fatty acid sulfonate, and/or linear sulfur succinate with a chain length of C₆ to C₂₄, preferably C₁₀-C₁₄.

The aforementioned viscoelastic composition are rheologically stable at temperatures of up to 300°F and advantageously form viscoelastic gels in low or high density brines with a strong elasticity that is suitable for carrying solid materials in subterranean operations.

The present invention also relates to a method of stimulating and/or modifying the permeability of an underground formation with the viscoelastic composition of the invention, and to drilling fluids, completion fluids, workover fluids, acidizing compositions and the like comprising the viscoelastic composition of the present invention. The viscoelastic compositions of the present invention can also be employed to gel most other aqueous systems, such as those utilized in cleaning formulations, water-based coatings, detergent formulations, personal care formulations, water based asphalt formulations and the like.
The ratio of alkyl amido quaternary amines to coadditive(s) in the viscoelastic composition of the invention, on a weight basis, varies from about 1000 to 1; in another embodiment 100 to 2; and in still another embodiment 20 to 5. Generally, the range is from about 10:1 to about 3:1, in another embodiment 6:1 to about 4:1.

An aqueous viscoelastic composition especially useful in underground applications can be obtained by adding one or more cationic gelling agents such as described below. The concentration of gelling agent in the aqueous viscoelastic composition is generally in the range of from about 0.5% to about 10% by weight, preferably from about 2% to about 8% by weight, and more preferably from about 3% to about 5% by weight based on the total weight of the composition. The concentration of coadditive in the aqueous viscoelastic composition is generally in the range of from about 0.001% to about 10% by weight, preferably from about 0.01% to about 1% by weight, and more preferably from about 0.1% to about 0.5% by weight based on the total weight of the composition. The aqueous composition of the invention can include inorganic salts and various additives as described herein below. Such a composition is advantageously injected into, for example, an underground system for use in drilling, stimulation (such as hydraulic fracturing), for permeability modification of underground formations, and for uses such as gravel packing, and cementing. A preferred viscoelastic composition according to the invention comprises from about erucyl amidopropyl trimethyl ammonium chloride, and a C₁₂ alpha olefin sulfonate, i.e., for example, sodium lauryl sulfate.

In a preferred embodiment, a pourable, concentrated gelling agent composition in accordance with the present invention is prepared by first preparing the alkyl amido quaternary amine component by reacting the corresponding fatty acid with dimethylaminopropylamine (DMAPA) and then quaternized with methyl chloride. The alkyl amido quaternary amine component is then combined with the coadditive at a preferred ratio of 10:1.

The concentration of viscoelastic composition preferably ranges from about 1 % to about 10% depending on the desired viscosity, more preferably about 2% to 8%, and most preferably about 3% to about 5%.

Brines gelled with such agents are advantageously used as water diversion agents, pusher fluids, fracturing fluids, drilling muds, gravel-packing fluids, drill-in fluids, work-over fluids, completion fluids, and the like.

The viscoelastic compositions of the present invention can also be utilized to gel most other aqueous systems, including but not limited to those utilized in cleaning and sanitizing formulations, water-based coatings (e.g. paints), detergent formulations, personal care formulations, water-based asphalt systems, concrete, building products, (e.g., motars, plasters, joint compounds, and the like), agricultural drift control agents and the like.

When used in stimulation applications, with the exception of fracturing and gravel pack fluids, the viscoelastic fluid can optionally include lubricants, corrosion inhibitors and various other additives.

Lubricants can include metal or amine salts of an organo sulfur, phosphorus, boron or carboxylic acid. Typical of such salts are carboxylic acids of 1 to 22 carbon atoms including both aromatic and aliphatic acids; sulfur acids such as alkyl and aromatic sulfonic acids and the like; phosphorus acids such as phosphoric acid, phosphorous acid, phosphinic acid, acid phosphate esters, and analogous sulfur homologs such as the thiophosphoric and dithiophosphoric acid and related acid esters; mercaptobenzothiozole; boron acids including boric acid, acid borates and the like; and lauric acid amine salts.

Corrosion inhibitors can include alkali metal nitrites, nitrates, phosphates, silicates and benzoates. Representative suitable organic inhibitors include hydrocarbyl amine and hydroxy-substituted hydrocarbyl amine neutralized acid compound, such as neutralized phosphates and hydrocarbyl phosphate esters, neutralized fatty acids (e.g., those having 8 to about 22 carbon atoms), neutralized aromatic carboxylic acids (e.g., 4-(t-butyl)-benzoic acid), neutralized naphthenic acids and neutralized hydrocarbyl sulfonates. Mixed salt esters of alkylated succinimides are also useful. Corrosion inhibitors can also include the alkanolamines such as ethanolamine, diethanolamine, triethanolamine and the corresponding propanolamines as well as morpholine, ethylenediamine, N,N-diethylethanolamine, alpha- and gamma-picoline, piperazine and isopropylaminoethanol.

Stimulation fluids can also include additives for specific applications to optimize the performance of the fluid. Examples include colorants; dyes; deodorants such as citronella; bactericides and other antimicrobials; chelating agents such as an ethylene diamine tetraacetate sodium salt or nitrilo triacetic acid; antifreeze agents such as ethylene glycol and analogous polyoxyalkylene polyols; anti-foamants such as silicone-containing agents and shear stabilizing agents such as commercially available polyoxyalkylene polyols. Anti-wear agents, friction modifiers, anti-slip and lubricity agents may also be added. Also included are extreme pressure additives such as phosphate esters and zinc dialkyl dithiophosphate.
The surfactants disclosed and described herein are advantageously used as gelling agents for fracturing fluids. Such fluids create channels or fractures in oil producing reservoir zones in order to improve oil production by providing a high permeability pathway from the reservoir rock to the well bore. Typically, in low permeability zones, fracturing fluids are pumped at pressures exceeding the overburden weight of the rock formation thereby causing splits and fractures in the formation rock. Propping agents (e.g. particulate matter) are added to the fluid to prevent the induced fractures from closing after the pumping phase is over by propping open the induced splits and fractures. Gelling agents are added to the fluid to transport such propping agents and to reduce fluid leakoff.

In higher permeability zones, different methods may be used, but fluid thickeners are often utilized.

The viscoelastic compositions disclosed herein provide several advantages over the polymers (e.g., polysaccharides) currently used as gelling agents for downhole fluids. For example, the compounds set forth herein (particularly the alkyl amidoamine quaternary, and more particularly, alkyl amidopropylamine quaternary) when used as gelling agents for downhole fluid produce less residue on the formation which could result in formation damage during and after the downhole process. Also, it is easier to prepare the gelled fluid as compared with polymers which typically must be hydrated, and the gelled fluid can be designed to "break" with formation temperatures or other factors such as oxidizers or acids. One can also "break" the gelled fluid by using solvents such as hydrocarbons, alcohols, or even oil from the formation. The gelling agents set forth below are useable over a wide range of temperature depending on chain length, and can assist in removing oil from the formation.

A suitable downhole fluid can include fresh water or seawater or a brine containing sodium chloride (typically 1-5% by weight) and/or calcium chloride (typically 0.5-3% by weight), to which optionally about 3% to about 10%, and preferably about 4% to about 6%, of the viscoelastic composition in accordance with the present invention.

For purposes of selectively modifying the permeability of underground rock formations the viscoelastic composition of the invention can first be blended with water to form a viscoelastic fluid which is then injected into the rock formation in an amount effective to reduce the permeability of the more permeable zone(s) of the formation. The concentration of viscoelastic composition in the fluid can be from about 0.5% to about 10%, preferably from about 2% to about 8%, and more preferably from about 3% to about 5% by weight.

The following non-limiting examples are illustrative of the method of modifying the rheological behavior of aqueous fluids in accordance with the present invention.

### Preparation of the viscoelastic composition of the present invention

Arquad® APA-E (shown below) is made by reacting erucic acid with DMAPA and then quaternized with methyl chloride in a suitable solvent. The final product has 80% active content and 20% solvent. The structure of the active component is shown below.

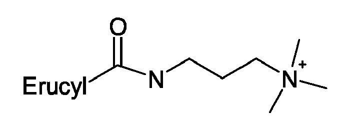

Witconate® AOS-12 is a commercial surfactant sample obtained from Akzo Nobel Surface Chemistry LLC, Chicago, Illinois, which is a 40% C₁₂ alpha olefin sulfonate sodium salt.

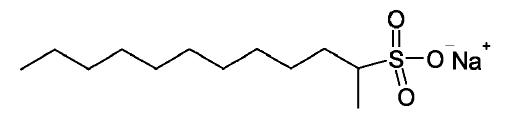

In preparing the viscoelastic composition, Arquad APA-E and Witconate AOS-12 were mixed at a ratio of 6 to 1, with the addition of stabilizing agents to make a stable, clear liquid product.

### Viscosity comparative testing procedure

All viscosity sample(s) were run on a Brookfield PVS Rotational viscometer with bob and cup geometry setup. All viscosity measurements were under 300 psi of Nitrogen pressure. The instrument was calibrated at various RPMs using a viscosity standard of 100 CP. The sample was prepared according to the following procedure: desired amount of material was added in a waring blender with aqueous KCl at a slow speed, then blended at high shear for 3 minutes. Then the sample was kept overnight at room temperature to remove excess foam. A transparent gel was formed. This gel was used to run viscosity tests using the Brookfield PVS with a Fann 50 geometry and a B5 bob. Typically sample volume of 40 ml was used for measurements. All viscosity numbers are reported in centipoise (cp).

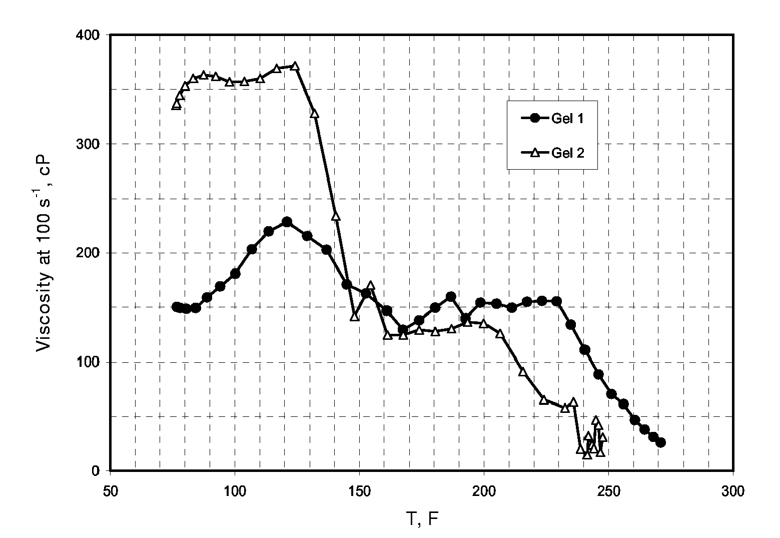

### Example 1 - heat up curves of 3.4% Arquad APA-E+0.6% Witcolate LCP (Gel 1) and

3.0% Arquad APA-E+ 2% Witconate SXS (Gel 2) in 4% KCl at 100 s⁻¹

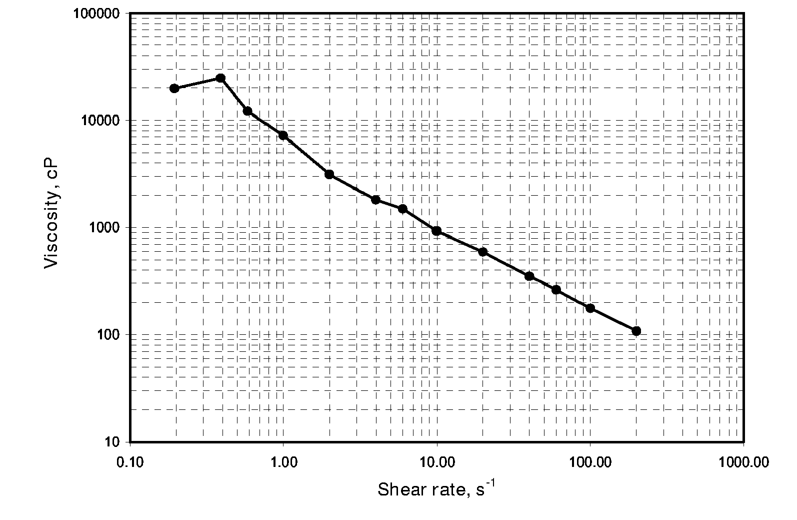

### Example 2 - Shear sweep of the gel of 3.4% Arquad APA-E + 0.6% Witconate AOS-12 in 4% KCI at room temperature

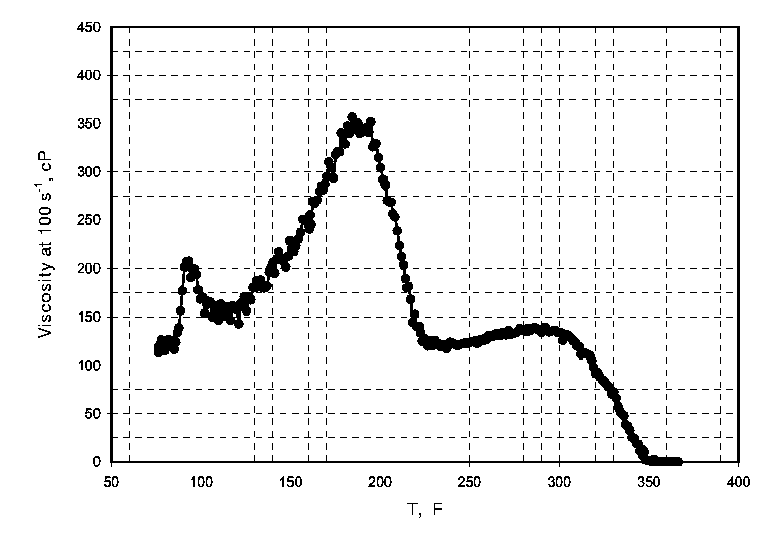

### Example 3 - Heat up curve of the gel of 2.6% Arquad APA-E + 0.4% Witconate AOS-12 in 14.2ppg CaBr₂ at 100 s⁻¹

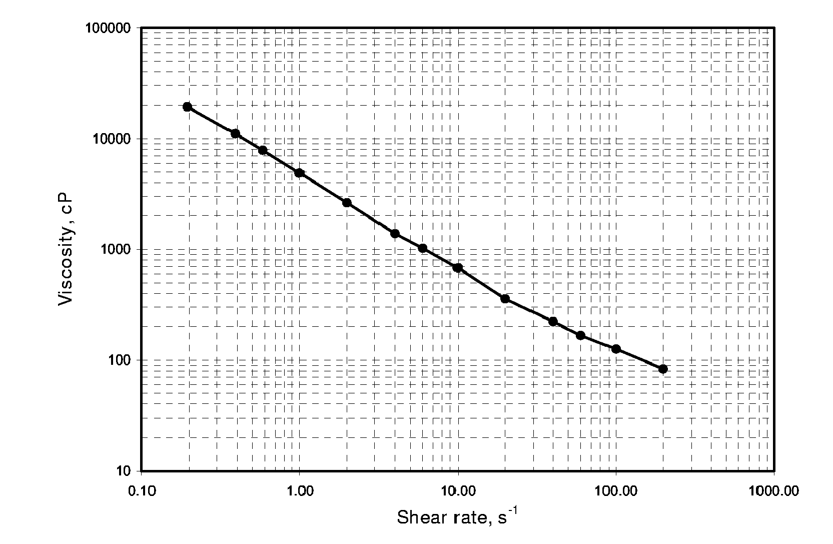

Example 4 - Shear sweep of the gel of 2.6% Arquad APA-E + 0.4% Witconate AOS-12 in 14.2ppg CaBr₂ at room temperature.

## Claims

1. A viscoelastic composition which comprises
i) at least one alkyl amido quaternary amine of general formula (I) 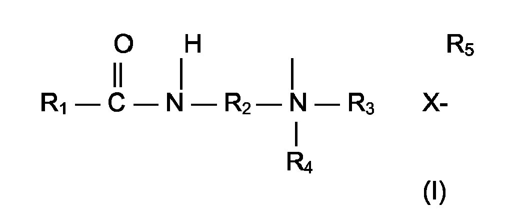 wherein R₁ is a saturated or unsaturated, straight or branched chain hydrocarbon chain of from 16 to 22 carbon atoms, R₂ is a divalent alkylene group of 2-6 carbon atoms which may be linear or branched, substituted or unsubstituted, and R₃, R₄ and R₅ are independently selected from C₁-C₆ substituted or unsubstituted, straight or branched chain, saturated or unsaturated alkyl or hydroxyalkyl groups that may optionally be alkoxylated, and X- is a counterion, and
ii) at least one coadditive.

2. The viscoelastic composition of claim 1 wherein R₁ is an aliphatic group of from about 15 to about 21 carbon atoms, and R₂ is an alkylene group of from about 2 to about 4 carbon atom.

3. The viscoelastic composition of claim 1 wherein R₁ is an aliphatic group derived from natural fats and oils having an iodine value of from about 1 to about 140, and R₂ is an alkylene group having 3 carbon atoms.

4. The viscoelastic composition of claim 1 wherein R₁ is selected from the group consisting of tallow alkyl, hardened tallow alkyl, rapeseed alkyl, hardened rapeseed alkyl, tall oil alkyl, hardened tall oil alkyl, coco alkyl, erucyl, stearyl, oleyl and soya alkyl, R₂ is an alkylene group having three carbon atoms, and R₃ and R₄ are each methyl.

5. The viscoelastic composition of claim 1 wherein R₃ and R₄ together with the amine nitrogen to which they are bonded form a heterocyclic group having a 5-member ring derived from pyrrolidine.

6. The viscoelastic composition of claim 1 wherein R₃ and R₄ together with the amine nitrogen to which they are bonded form a heterocyclic group having a 6-member ring derived from piperidine.

7. The viscoelastic composition of claim 1 wherein R₃ and R₄ together with the amine nitrogen to which they are bonded form a heterocyclic group having a 6-member ring derived from morpholine.

8. The composition of claim 1 wherein X⁻ is selected from X⁻ is halides, oxo ions of phosphorous, sulfur, or chloride, organic anions including but not limited to chlorides, bromides, iodides, oxides of phosphorous, hypochlorides, phosphates, phosphates, oxides of sulfur, sulfates, sulfites, sulfonates, phosphates, acetates, carboxylates, chlorates, perchlorates, salicylates, phthalates, lactates, maleates, glycinates, citrates, citric acid, lactic acid, salicylic acid, phthalic acid, benzoic acid, naphthoic acid, or an amino acid.

9. The viscoelastic composition of claim 1 wherein said coadditive comprises a sulfonate, sulfate, inorganic acid or organic acid.

10. The viscoelastic composition of claim 9 wherein said coadditive is a linear alkyl sulfate, a linear alkyl sulfonate, a linear alpha olefin sulfate, a linear alpha olefin sulfonate, a linear fatty acid sulfonate, a linear sulfur succinate or a mixture thereof.

11. The viscoelastic composition of claim 10 wherein said coadditive has a carbon chain length of C₆ to C₂₄.

12. The viscoelastic composition of claim 11 wherein said coadditive has a carbon chain length of C₁₀-Cₗ₄.

13. The viscoelastic composition of claim 1 wherein said quaternary amine is erucyl amidopropyl trimethyl ammonium chloride, isostearylamidopropylmorpholine, dimethylalkylglycerolammonium chloride, or a mixture thereof.

14. The viscoelastic composition of claim 13 wherein said coadditive is C₁₀-C₁₄ linear alkyl sulfate, a C₁₀-C₁₄ linear alkyl sulfonate, a C₁₀-C₁₄ linear alpha olefin sulfate, a C₁₀-C₁₄ linear alpha olefin sulfonate, a C₁₀-C₁₄ linear fatty acid sulfonate, a C₁₀-C₁₄ linear sulfur succinate or a mixture thereof.

15. The viscoelastic composition of claim 1 wherein the ratio of quaternary amine to coadditive is, on a weight basis, from about 1000 to 1 to about 50:1.

16. The viscoelastic composition of claim 1 wherein the ratio of quaternary amine to coadditive is, on a weight basis, from about 50:1 to about 5:1.

17. An aqueous based fluid for oil field applications which comprises the viscoelastic composition of claim 1.

18. The fluid of claim 17 which comprises from 0.05% to about 10% by weight of said viscoelastic composition.

19. The fluid of claim 17 which comprises from about 0.05 to about 10% by weight of said quaternary amine, and from about 0.1% to about 5% by weight of said coadditive.

20. A oil field high density brine composition which comprises from about 30 wt% to about 70 wt% of organic and/or inorganic salt and the viscoelastic composition of claim 1.

21. An oil field high density brine completion fluid comprising:
a) about 30 wt-% to about 70 wt-% of at least one inorganic or organic salt;
b) about 0.1 wt-% to about 4 wt-% at least one cationic surfactant selected from erucyl amidopropyl trimethyl ammonium chloride, isostearylamidopropylmorpholine, dimethylalkylglycerolammonium chloride, or a mixture thereof, and
c) at least one coadditive selected from C₁₀-C₁₄ linear alkyl sulfate, a C₁₀-C₁₄ linear alkyl sulfonate, a C₁₀-C₁₄ linear alpha olefin sulfate, a C₁₀-C₁₄ linear alpha olefin sulfonate, a C₁₀-C₁₄ linear fatty acid sulfonate, a C₁₀-C₁₄ linear sulfur succinate or a mixture thereof.

22. A method of fracturing a subterranean formation comprising the steps of:
I) providing a thickened aqueous based hydraulic fracturing fluid, comprising:
a) an aqueous medium; and
b) an effective amount of a viscoelastic composition comprising
i) at least one alkylamido quaternary amine, and
ii) at least one coadditive,
wherein said quaternary amine is of the general formula (I) 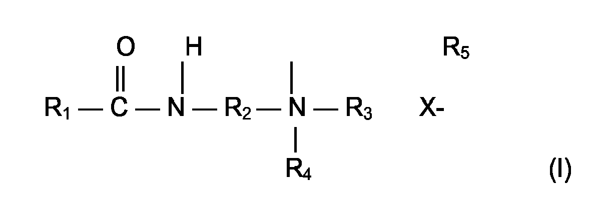 wherein R₁ is a saturated or unsaturated, straight or branched chain hydrocarbon chain of from 16 to 22 carbon atoms, R₂ is a divalent alkylene group of 2-6 carbon atoms which may be linear or branched, substituted or unsubstituted, and R₃, R₄ and R₅ are independently selected from C₁-C₆ substituted or unsubstituted, straight or branched chain, saturated or unsaturated alkyl or hydroxyalkyl groups that may optionally be alkoxylated, and X- is a counterion, and said coadditive is a linear alkyl sulfate, a linear alkyl sulfonate, a linear alpha olefin sulfate, a linear alpha olefin sulfonate, a linear fatty acid sulfonate, a linear sulfur succinate or a mixture thereof, and
II) pumping the aqueous fracturing fluid through a wellbore and into a subterranean formation at a pressure sufficient to fracture the formation.

23. The method of claim 22 wherein the ratio of quaternary amine to coadditive is, on a weight basis, from about 1000 to 1 to about 50:1.

24. The method of claim 23 wherein the ratio of quaternary amine to coadditive is, on a weight basis, from about 50:1 to about 5:1.

25. The method of claim 22 wherein the fracturing fluid comprises from 0.05% to about 10% by weight of said viscoelastic composition.

26. The method of claim 22 wherein the fracturing fluid comprises from about 0.05 to about 10% by weight of said quaternary amine, and from about 0.1 % to about 5% by weight of said coadditive.

27. The method of claim 22 wherein said quaternary amine is selected from erucyl amidopropyl trimethyl ammonium chloride, isostearylamidopropylmorpholine, dimethylalkylglycerolammonium chloride, or a mixture thereof, and said at least one coadditive selected from C₁₀-C₁₄ linear alkyl sulfate, a C₁₀-C₁₄ linear alkyl sulfonate, a C₁₀-C₁₄ linear alpha olefin sulfate, a C₁₀-C₁₄ linear alpha olefin sulfonate, a C₁₀-C₁₄ linear fatty acid sulfonate, a C₁₀-C₁₄ linear sulfur succinate or a mixture thereof.

28. The method of claim 22 wherein said quaternary amine is selected from erucyl amidopropyl trimethyl ammonium chloride and said coadditive is a C₁₂ alpha olefin sulfonate sodium salt.
